(19) Europäisches Patentamt
European Patent Office
Office européen des brevets

(11) Veröffentlichungsnummer: **0 321 818 A2**

# (12) EUROPÄISCHE PATENTANMELDUNG

(21) Anmeldenummer: **88120706.2**

(22) Anmeldetag: **12.12.88**

(51) Int. Cl.4: **C08G 63/68 , C08G 63/76 , C04B 24/28**

(30) Priorität: **21.12.87 DE 3743413**

(43) Veröffentlichungstag der Anmeldung: **28.06.89 Patentblatt 89/26**

(84) Benannte Vertragsstaaten: **AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Wahle, Bernd, Dr.**
**Am Heidt 24**
**D-4044 Kaarst 2(DE)**
Erfinder: **Anzinger, Hermann, Dr.**
**Emil-Barth-Strasse 1**
**D-4000 Düsseldorf(DE)**
Erfinder: **Ziche, Horst**
**Ernst-Lemmerstrasse 65**
**D-4000 Düsseldorf 13(DE)**
Erfinder: **Schinski, Erhard**
**Erftstrasse 26**
**D-4006 Erkrath(DE)**

## (54) Wasserlösliche Polykondensate auf Basis von Fettsäuren, dialkanolamin und Maleinsäureanhydrid, Verfahren zu ihrer Herstellung, sie enthaltende hydraulische Massen und ihre Verwendung.

(57) Wasserlösliche Polykondensate aus Dialkanolamiden, Fettsäurediethylamino-polyglykolaten und Fettsäurediethylammoniumalkyl-polyglykolaten, die zunächst mit Maleinsäureanhydrid im Molverhältnis von 1 : 0,5 bis 1 : 2 umgesetzt werden, gefolgt von einer Umsetzung von im wesentlichen sämtlichen in alpha-Stellung zu Carboxylgruppen befindlichen olefinischen Doppelbindungen mit Sulfiten, sind ausgezeichnete Verflüssiger für hydraulische Massen.

EP 0 321 818 A2

# Wasserlösliche Polykondensate auf Basis von Fettsäuren, Dialkanolamin und Maleinsäureanhydrid, Verfahren zu ihrer Herstellung, sie enthaltende hydraulische Massen und ihre Verwendung

Die Erfindung betrifft wasserlösliche Polykondensate auf Basis von $C_8$-$C_{22}$-Fettsäuren, Dialkanolamin bzw. alkoxylierten Derivaten desselben und Maleinsäureanhydrid.

Bei den wasserlöslichen Polykondensaten handelt es sich im wesentlichem um Polyester aus Fettsäuredialkanolamiden bzw. Fettsäuredialkanolamino-polyglykolaten und Maleinsäureanhydrid, die durch Addition von Sulfiten in wasserlösliche, Sulfonatgruppen enthaltende Verbindungen überführt worden sind.

Die wasserlöslichen Polykondensate der Erfindung sind erhältlich durch Kondensation von

a) Dialkanolamiden der Formel I

$R\text{-}CO\text{-}N(C_kH_{2k}\text{-}OH)_2$ (I)

in der R-CO- den Rest einer $C_8$-$C_{22}$-Fettsäure und k die Zahlen 2 oder 3 bedeuten,

Fettsäuredialkanolamino-polyglykolaten der Formel II

$R\text{-}CO\text{-}(O\text{-}C_mH_{2m})_n\text{-}N(C_kH_{2k}\text{-}OH)_2$ (II)

in der R-CO- und k wie oben definiert sind, sowie m die Zahlen 2 und/oder 3 und

n eine Zahl zwischen 1 und 10 bedeuten,

oder

Dialkanolammoniumalkyl-polyglykolaten der Formel III

$R\text{-}CO\text{-}(O\text{-}C_mH_{2m})_n\text{-}\overset{+}{N}(C_kH_{2k}\text{-}OH)_2R^1\ X^-$ (III)

in der

R-CO-, k, m und n wie oben definiert sind,

$R^1$ eine $C_1$-$C_4$-Alkylgruppe bedeutet und

$X^-$ der Rest eines Alkylierungsmittels ist,

mit Maleinsäureanhydrid in Molverhältnissen von 1 : 0,5 bis 1 : 2, insbesondere 1 : 0,5 bis 1 : 1,25, zu einem Kondensationsprodukt mit einer Säurezahl von maximal 20, und

b) Umsetzung von im wesentlichen sämtlichen in alpha-Stellung zu Carboxylgruppen befindlichen olefinischen Doppelbindungen des Kondensationsproduktes mit Sulfiten.

Die Ausgangsverbindungen der Formeln I, II, und III sind bekannte handelsübliche Fettsäurederivate. Sie werden prinzipiell hergestellt, indem man die entsprechenden Fettsäuren bzw. reaktive Derivate derselben wie Säurechloride, Ester und dergleichen mit Diethanolamin, Di-n-propanolamin oder Diisopropanolamin, den mit bis zu 10 Ethylenoxid- und/oder Propylenoxideinheiten (in random- oder block-Verteilung) alkoxylierten entsprechenden Dialkanolaminen oder mit $C_1$-$C_4$-Alkylierungsmitteln wie Methylhalogenid oder Dimethylsulfat quaternierten Derivaten der vorgenannten ethoxylierten und/oder propoxylierten Dialkanolamine umsetzt. Dabei werden Fettsäuren natürlichen, insbesondere pflanzlichen, tierischen und/oder seetierischen Ursprungs, oder synthetische Fettsäuren, insbesondere Capryl-, Caprin-, Laurin-, Myristin-, Palmitin-, Stearin-, Arachidin-, Behen-, Laurolein-, Myristolein-, Palmitolein-, Olein-, Gadolein- oder Erucasäure eingesetzt, insbesondere technische Gemische derselben. Die vorgenannten technischen Fettsäuregemische bzw. ihre Derivate lassen sich z.B. aus Soja-, Sonnenblumen-, Rüb-, Baumwollsaat-, Fisch-, Kokos-, Palmkern- und Palmöl sowie aus tierischen Talgen herstellen.

Die vorstehend skizzierten Ausgangsverbindungen I, II bzw. III werden in üblicher Weise mit Maleinsäureanhydrid kondensiert; die Kondensationsprodukte enthalten die besonders reaktiven, in alpha-Stellung zu Carboxylgruppen befindlichen olefinischen Doppelbindungen des Maleinsäureanhydrids, an die in an sich bekannter Weise Sulfite addiert werden können, vgl. J. Falbe (Ed.), Surfactants in Consumer Products, Springer-Verlag Heidelberg, 1987, S. 82 bis 83. Dabei entstehen formal Salze von Sulfobernsteinsäurederivaten.

Als Sulfite können dabei wasserlösliche Salze der schwefligen Säure eingesetzt werden, insbesondere Natriumdisulfit ($Na_2S_2O_5$) bzw. Natriumbisulfit ($NaHSO_3$), weiterhin auch die entsprechenden Lithium-, Kalium- und Ammoniumsalze.

Im Falle der Ausgangsverbindungen I und II entstehen Polykon densate, die das Strukturelement

$$\begin{array}{l} \qquad\qquad\qquad\qquad\qquad\quad C_kH_{2k}\text{-O-CO-CH}(SO_3M)\text{-}CH_2\text{-CO-} \\ \qquad\qquad\qquad\qquad\qquad\quad | \\ R\text{-CO-}(OC_mH_{2m})_{0-10}\text{-N-}C_kH_{2k}\text{-O-CO-}CH_2\text{-C}(SO_3M)\text{-CO-} \end{array}$$

(M = Kation der Sulfite)

enthalten, wobei die Position der $SO_3M$-Gruppen, welche auch an jeweils dem anderen, in alpha-Stellung zu einer CO-Funktion befindlichen C-Atom gebunden sind können, nicht genau angegeben werden kann; im Falle der Ausgangsverbindung III entsteht eine analoge Verbindung mit einem quartären Stickstoffatom.

Gemäß einer vorteilhaften Ausführungsform der Erfindung sind die Reste R-CO- in den obigen Formeln I, II und III Reste von $C_{12}$-$C_{18}$-Fettsäuren bzw. von technischen Gemischen derselben.

Die Erfindung ist weiterhin auf ein Verfahren zur Herstellung von wasserlöslichen Polykondensaten auf Basis von $C_8$-$C_{22}$-, insbesondere $C_{12}$-$C_{18}$-Fettsäuren, Dialkanolamin bzw. alkoxyliertem Dialkanolamin und gegebenenfalls quaternierten Derivaten desselben und Maleinsäureanhydrid gerichtet, das dadurch gekennzeichnet ist, daß man

a) Dialkanolamide der obigen Formel I, Fettsäuredialkanolamino-polyglykolate der obigen Formel II oder Fettsäuredialkanolammoniumalkyl-polyglykolate der obigen Formel III mit Maleinsäureanhydrid in Molverhältnissen von 1 : 0,5 bis 1 : 2, insbesondere 1 : 0,5 bis 1 : 1,25, zu einem Kondensationsprodukt mit einer Säurezahl von maximal 20 und

b) im wesentlichen sämtliche in alpha-Stellung zu Carboxylgruppen befindlichen olefinischen Doppelbindungen des Kondensationsprodukts mit Sulfiten umsetzt.

Die Erfindung betrifft weiterhin hydraulische Massen auf Basis von Zement, Gips und/oder Kalk, die die Polykondensate der Erfindung als insbesondere verflüssigende Additive enthalten, gegebenenfalls zusammen mit nicht-ionischen Tensiden, vorzugsweise ethoxylierten und/oder propoxylierten $C_{12}$-$C_{22}$-Fettalkoholen bzw. technischen Gemischen derselben.

Schließlich ist die Erfindung auf die Verwendung der oben beschriebenen wasserlöslichen Polykondensate, einzeln oder in Form von Mischungen derselben, gegebenenfalls zusammen mit nicht-ionischen Tensiden, insbesondere ethoxylierten und/oder propoxylierten $C_{12}$-$C_{22}$-Fettalkoholen bzw. technischen Gemischen derselben, als insbesondere verflüssigende Zusätze für hydraulische Massen auf Basis von Zement, Gips und/oder Kalk gerichtet, die als Putze, Ausgleichsmassen oder dergleichen eingesetzt werden können.

Die Erfindung wird im folgenden anhand bevorzugter Ausführungsbeispiele näher erläutert.

Beispiel 1.

282,0 g (1 Mol) eines handelsüblichen Laurin-/Myristinsäurediethanolamids, hergestellt durch Umsetzung eines Laurin-/Myristinsäuremethylesters (Kettenlängenverteilung ca. 52 bis 60 % $C_{12}$, 19 bis 23 % $C_{14}$, ca. 10 % $C_{16}$) mit Diethanolamin, wurden zusammen mit 88,2 g (0,9 Mol) Maleinsäureanhydrid in 100 ml Xylol zum Sieden erhitzt (Sumpftemperatur 150 bis 160 °C). Nach ca. 4,5 Stunden hatten sich etwa 90 % der theoretischen Wassermenge abgeschieden. Durch Abdestillation des Xylols wurde die Sumpftemperatur auf 160 bis 170 °C gesteigert; die Reaktion wurden innerhalb von 6 Stunden bei dieser Temperatur vervollständigt. Die Säurezahl des Reaktionsgemisches betrug weniger als 20 (gegebenenfalls muß eine längere Reaktionszeit gewählt werden, um eine Säurezahl von weniger als 20 zu erreichen). Anchließend wurde das Lösemittel im Vakuum (ca. 30 bis 40 mbar) abdestilliert; man ließ die resultierende Schmelze auf 90 bis 100 °C abkühlen und fügte innerhalb von 1,5 Stunden eine 18 %-ige wäßrige Lösung von 85,5 g (0,45 Mol) Natriumdisulfit ($Na_2S_2O_5$) hinzu. Nach weiteren 1,5 Stunden bei 90 bis 100 °C erhielt man eine hellgelbe, viskose Flüssigkeit mit einem (berechneten) Feststoff-Gehalt von 53 %. Durch Zugabe von Toluol wurde das Wasser azeotrop entfernt; der resultierende Feststoff wurde zerkleinert. Man erhielt ein hellgelbes Pulver mit einem Schmelzpunkt von 202 °C.

In den folgenden Beispielen 2 bis 11 wird die Herstellung von wasserlöslichen Polykondensaten der Erfindung beschrieben; da die Verfahrensweise derjenigen des Beispiels 1 entspricht, werden nur noch die eingesetzten Reaktanten angegeben.

Beispiel 2.

1 Mol Fettsäurediethanolamid gemäß Beispiel 1
0.5 Mol Maleinsäureanhydrid
0,25 Mol Natriumdisulfit

Beispiel 3.

1 Mol Fettsäurediethanolamid gemäß Beispiel 1
1,25 Mol Maleinsäureanhydrid.
0.625 Mol Natriumdisulfit

Beispiel 4.

1 Mol Fettsäurediethanolamid gemäß Beispiel 1
2 Mol Maleinsäureanhydrid.
1 Mol Natriumdisulfit

Beispiel 5.

1 Mol Fettsäurediethanolamid gemäß Beispiel 1
0.95 Mol Maleinsäureanhydrid.
0.475 Mol Natriumdisulfit

Beispiel 6.

1 Mol Fettsäurediethanolaminodiglykolat (aus dem Fettsäureester gemäß Beispiel 1 und Diethanolamin x 2 EO; EO = umgesetzte Ethylenoxideinheiten)
1 Mol Maleinsäureanhydrid.
0.5 Mol Natriumdisulfit

Beispiel 7.

1 Mol Fettsäurediethanolamino-polyglykolat (aus dem Fettsäureester gemäß Beispiel 1 und Diethanolamin x 3,6 EO)
1 Mol Maleinsäureanhydrid.
0.5 Mol Natriumdisulfit

Beispiel 8.

1 Mol Fettsäurediethanolamino-polyglykolat (aus enem $C_{12/18}$-Fettsäuremethylesterschnitt und Diethanolamin x 6 EO)
1 Mol Maleinsäureanhydrid.
0,5 Mol Natriumdisulfit

Beispiel 9.

1 Mol Fettsäurediethylammoniummethyl-polyglykolat-chlorid (aus einem Fettsäureester gemäß Beispiel 1 und 3,6 EO x Diethanolamin, quaterniert mit $CH_3Cl$).
1 Mol Maleinsäureanhydrid
0,5 Mol Natriumdisulfit

Beispiel 10.

1 Mol Kokosfettsäurediethanolamid
0,9 Mol Maleinsäureanhydrid.
0,45 Mol Natriumdisulfit

Beispiel 11.

1 Mol technisches Laurinsäurediethanolamid
1 Mol Maleinsäureanhydrid.
0,5 Mol Natriumdisulfit

Die Verbindungen wurden hinsichtlich ihrer Verwendbarkeit als Verflüssiger für gips- bzw. zementhaltige Massen getestet.

Die Versuche mit Gipsmassen wurden so durchgeführt, daß man die Probe innerhalb von 30 sec in das vorgelegte Anmachwasser einstreute und weitere 30 sec sumpfen ließ. Anchließend wurde ein Vicatring (DIN 1168) gefüllt und durch Anheben entleert. Das Ausbreitmaß (d.h. der Durchmesser des gebildeten Kuchens) wurde mittels eines Lineals mit mm-Einteilung gemessen.

Die so erhaltenen Ergebnisse für alpha-Halbhydrat sind in Tabelle 1, die für beta-Halbhydrat in Tabelle 2 zusammengefaßt. Es zeigte sich, daß die verflüssigende Wirkung der Verbindungen der Erfindung durch einen Zusatz an nicht-ionischen Tensiden, z.B. ethoxylierten Fettalkoholen der Kettenlängenverteilung von $C_{12}$ bis $C_{22}$, noch verstärkt werden konnte. Eine weitere Verstärkung des vorgenannten Effektes erhält man dadurch, daß man die Verbindungen der Erfindung und gegebenenfalls die nicht-ionischen Tenside vorher in dem Anmachwasser löst (vgl. Versuche Nr. 6 Tabellen 1 und 2).

Die Versuche der verflüssigenden Wirkung bei zementhaltigen Massen sind in der Tabelle 3 zusammengefaßt. Hier wurden die organischen Substanzen trocken mit Zement und Sand vermischt und anschließend in das vorgelegte Wasser gegeben. Nach 30 sec Rühren von Hand wurde ein Metallring mit einem Durchmesser von 50 mm, einer Höhe von 45 mm und einem Volumen von 88 $cm^3$ randvoll gefüllt. Anschließend wurde der Ring nach oben abgehoben; das Ausbreitmaß wurde nach einer Minute bestimmt. Auch bei Zement ergab sich, daß die verflüssigende Wirkung der Verbindungen der Erfindung durch Zusatz der obengenannten nichtionischen Tenside verbessert wurde.

Tabelle 1

| Versuch Nr. | 1 | 2 | 3 | 4 | 5 | 6* |
|---|---|---|---|---|---|---|
| beta-Halbhydrat (Naturgips) | 250 | 250 | 250 | 250 | 250 | 250 |
| Bsp. 1 | - | 1 | 1,25 | 1 | 1 | 0,5 |
| Cetyl-stearylalkohol x 50 EO | - | - | - | 0,1 | - | 0,05 |
| Oleyl-cetylalkohol x 5 EO | - | - | - | - | 0,1 | - |
| Wasser | 100 | 100 | 100 | 100 | 100 | 100 |
| Ausbreitmaß (mm) | 160 | 210 | 250 | 300 | 240 | 230 |

* organ. Substanzen vorher im Anmachwasser gelöst
Mengenangaben in g

Tabelle 2

| Versuch Nr. | 1 | 2 | 3 | 4 | 5 | 6* |
|---|---|---|---|---|---|---|
| beta-Halbhydrat (Naturgips) | 200 | 200 | 200 | 200 | 200 | 200 |
| Bsp. 1 | - | 0,4 | 0,8 | 0,5 | 1,0 | 0,45 |
| Cetyl-stearylalkohol x 50 EO | - | 0,05 | 0,1 | - | - | 0,05 |
| Wasser | 120 | 120 | 120 | 120 | 120 | 120 |
| Ausbreitmaß (mm) | 120 | 120 | 210 | 155 | 200 | 170 |

* organ. Substanzen im Anmachwasser gelöst
Mengenangaben in g

Tabelle 3

| Versuch Nr. | 1 | 2 | 3 | 4 | 5 |
|---|---|---|---|---|---|
| Portlandzement 35 F | 70 | 70 | 70 | 70 | 70 |
| Quarzsand 0 - 0,5 mm | 130 | 130 | 130 | 130 | 130 |
| Bsp. 1 | - | 1,0 | 2,0 | 0,9 | 1,8 |
| Cetyl-stearylalkohol x 50 EO | - | - | - | 0,1 | 0,2 |
| Wasser | 40 | 40 | 40 | 40 | 40 |
| Ausbreitmaß (mm) | Kein Fließen | 133 | 137 | 176 | 177 |

## Ansprüche

1. Wasserlösliche Polykondensate auf Basis von $C_8$-$C_{22}$-Fettsäuren, Dialkanolamin bzw. alkoxylierten Derivaten desselben und Maleinsäureanhydrid, erhältlich durch Kondensation von

a) Dialkanolamiden der Formel I

$R\text{-}CO\text{-}N(C_kH_{2k}\text{-}OH)_2$ (I)

in der R-CO- den Rest einer $C_8$-$C_{22}$-Fettsäure und k die Zahlen 2 oder 3 bedeutet,

Dialkanolamino-polyglykolaten der Formel II

$R\text{-}CO\text{-}(O\text{-}C_mH_{2m})_n\text{-}N(C_kH_{2k}\text{-}OH)_2$ (II)

in der R-CO- und k wie oben definiert ist, sowie m die Zahlen 2 und/oder 3 und n eine Zahl zwischen 1 und 10 bedeuten,

oder

Dialkanolammoniumalkyl-polyglykolaten der Formel III

$R\text{-}CO\text{-}(O\text{-}C_mH_{2m})_n\text{-}N^+(C_kH_{2k}\text{-}OH)_2R^1\ X^-$ (III)

in der

R-CO-, k, m und n wie oben definiert sind und

R' eine $C_1$-$C_4$-Alkylgruppe bedeutet und

$X^-$ der Rest eines Alkylierungsmittels ist,

mit Maleinsäureanhydrid in Molverhältnissen von 1 : 0,5 bis 1 : 2, insbesondere 1 : 0,5 bis 1 : 1,25, zu einem Kondensationsprodukt mit einer Säurezahl von maximal 20, und

b) Umsetzung von im wesentlichen sämtlichen in alpha-Stellung zu Carboxylgruppen befindlichen olefinischen Doppelbindungen des Kondensationsproduktes mit Sulfiten.

2. Wasserlösliche Polykondensate nach Anspruch 1, erhältlich durch Umsetzung von Kondensaten aus den Dialkanolamiden, Dialkanolamino-polyglykolaten bzw. Dialkanolammonium-polyglykolaten der Formeln I, II bzw. III, in denen k = 1 ist und R, $R^1$, m, n und X wie oben definiert sind, und Maleinsäureanhydrid mit Lithium-, Natrium-, Kalium- oder Ammoniumsulfiten, insbesondere Natrium-disulfit ($Na_2S_2O_5$) bzw. Natrium-bisulfit ($NaHSO_3$).

3. Wasserlösliche Polykondensate nach Anspruch 1 oder 2, dadurch gekennzeichnet, daß die Gruppe R-CO- in den Verbindungen gemäß den Formeln I, II und III der Rest einer $C_{12}$-$C_{18}$-Fettsäure ist.

4. Verfahren zur Herstellung von wasserlöslichen Polykondensaten auf Basis von $C_8$-$C_{22}$-, insbesondere $C_{12}$-$C_{18}$-Fettsäuren, Dialkanolamin bzw. alkoxylierten Derivaten desselben und Maleinsäureanhydrid, dadurch gekennzeichnet, daß man

a) Dialkanolamide der Formel I

$R\text{-}CO\text{-}N(C_kH_{2k}\text{-}OH)_2$ (I)

in der R-CO- den Rest einer $C_8$-$C_{22}$-Fettsäure und k die Zahlen 2 oder 3 bedeutet,

Dialkanolamino-polyglykolate der Formel II

$R\text{-}CO\text{-}(O\text{-}C_mH_{2m})_n\text{-}N(C_kH_{2k}\text{-}OH)_2$ (II)

in der R-CO- und k wie oben definiert sind, sowie m die Zahlen 2 und/oder 3 und n eine Zahl zwischen 1 und 10 bedeuten,

oder

Dialkanolammoniumalkyl-polyglykolate der Formel III

$R\text{-}CO\text{-}(O\text{-}C_mH_{2m})_n\text{-}\overset{+}{N}(C_kH_{2k}\text{-}CH_2\text{-}OH)_2R^1\ X^-$ (III)

in der

R-CO-, k, m und n wie oben definiert sind und

$R^1$ eine $C_1$-$C_4$-Alkylgruppe bedeutet, und

$X^-$ der Rest eines Alkylierungsmittels ist,

mit Maleinsäureanhydrid in Molverhältnissen von 1 : 0,5 bis 1 : 2, insbesondere 1 : 0,5 bis 1 : 1,25, zu einem Kondensationsprodukt mit einer Säurezahl von maximal 20, und

b) im wesentlichen sämtliche in alpha-Stellung zu Carboxylgruppen befindlichen olefinischen Doppelbindungen des Kondensationsproduktes mit Disulfit bzw. Bisulfit umsetzt.

5. Verfahren nach Anspruch 4, dadurch gekennzeichnet, daß man Kondensate aus den Dialkanolamiden, Dialkanolamino-polyglykolaten bzw. Dialkanolammonium-polyglykolaten der Formeln I, II bzw. III, in denen k = 1 ist und R, $R^1$, m, n und X wie oben definiert sind, und Maleinsäureanhydrid mit Lithium-, Natrium-, Kalium- oder Ammoniumsulfiten, insbesondere Natriumdisulfit ($Na_2S_2O_5$) bzw. Natriumbisulfit ($NaHSO_3$) umsetzt.

6. Hydraulische Massen auf Basis von Zement, Gips und/oder Kalk, enthaltend wasserlösliche Kondensate nach einem der Ansprüche 1 - 3, gegebenenfalls zusammen mit nicht-ionischen Tensiden, insbesondere ethoxylierten und/oder propoxylierten $C_{12}$-$C_{22}$-Fettalkoholen bw. technischen Gemischen derselben.

7. Verwendung der wasserlöslichen Polykondensate nach einem der Ansprüche 1 bis 3, einzeln oder in Form von Mischungen derselben, als Zusätze für Zement, Gips und Kalk.

8. Verwendung nach Anspruch 7, dadurch gekennzeichnet, daß man die wasserlöslichen Polykondensate zusammen mit nicht-ionischen Tensiden, insbesondere ethoxylierten und/oder propoxylierten $C_{12}$-$C_{22}$-Fettalkoholen, verwendet.